(19) **Europäisches Patentamt / European Patent Office / Office européen des brevets**

(11) **EP 3 232 556 B1**

(12) **FASCICULE DE BREVET EUROPEEN**

(45) Date de publication et mention
de la délivrance du brevet:
**22.09.2021 Bulletin 2021/38**

(51) Int Cl.:
*H02M 7/46* *(2006.01)*    *H02M 7/23* *(2006.01)*
*H02M 7/06* *(2006.01)*    *H02P 5/74* *(2006.01)*
*H02M 1/12* *(2006.01)*

(21) Numéro de dépôt: **17160724.5**

(22) Date de dépôt: **14.03.2017**

(54) **PROCÉDÉ ET SYSTÈME DE COMMANDE POUR UNE INSTALLATION DE COMMANDE DE MOTEUR ÉLECTRIQUE**

STEUERVERFAHREN UND -SYSTEM FÜR EINE ANLAGE ZUR STEUERUNG EINES ELEKTROMOTORS

METHOD AND SYSTEM FOR CONTROLLING AN ELECTRIC MOTOR CONTROL INSTALLATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.04.2016 FR 1653304**

(43) Date de publication de la demande:
**18.10.2017 Bulletin 2017/42**

(73) Titulaire: **Schneider Toshiba Inverter Europe SAS
27120 Pacy sur Eure (FR)**

(72) Inventeurs:
• **BOULHARTS, Hocine**
**78510 Triel sur Seine (FR)**
• **MESSAOUDI, Mehdi**
**27200 Vernon (FR)**
• **VIDET, Arnaud**
**59000 Lille (FR)**

(74) Mandataire: **Mouney, Jérôme et al
Schneider Electric Industries SAS
Service Propriété Industrielle
35 rue Joseph Monier - CS30323
92506 Rueil Malmaison Cedex (FR)**

(56) Documents cités:
**EP-A2- 2 442 436        FR-A1- 2 960 110
US-A1- 2011 122 661    US-A1- 2011 260 656**

**Description**

**Domaine technique de l'invention**

La présente invention se rapporte à un procédé de commande mis en œuvre pour une installation de commande de moteur électrique et à un système de commande employé dans ladite installation pour mettre en œuvre ledit procédé.

**Etat de la technique**

Il est connu d'employer des installations de commande à plusieurs convertisseurs pour commander un ou plusieurs moteurs électriques. On distingue ainsi différentes architectures :

- Dans une première architecture, l'installation comporte au moins deux convertisseurs de type onduleur connectés en parallèle à un même bus continu d'alimentation, chacun de ces onduleurs étant destiné à la commande d'un moteur électrique distinct.
- Dans une deuxième architecture, l'installation comporte un premier convertisseur de type redresseur actif connecté au réseau et un deuxième convertisseur de type onduleur destiné à la commande d'un moteur électrique.

De manière classique, les instants de commutation des transistors de chaque convertisseur sont déterminés par modulation de largeur d'impulsion (ci-après MLI). Une MLI de type intersective consiste à comparer une porteuse triangulaire symétrique ou asymétrique avec une ou plusieurs modulantes.
Il est connu que l'augmentation de la fréquence de découpage appliquée à un convertisseur entraîne une hausse du courant de mode commun. Le courant de mode commun généré peut emprunter différents chemins entre le système et chaque moteur électrique. Ces chemins sont créés par des couplages capacitifs générés :

- Entre les conducteurs du câble reliant chaque convertisseur à sa charge électrique,
- Entre les enroulements du moteur et le stator, et
- Entre les transistors de chaque convertisseur et le dissipateur relié à la terre.

Lorsque l'installation comporte ainsi deux convertisseurs selon l'une des deux architectures décrites ci-dessus, la tension de mode commun totale est la somme des perturbations fournies par chacun des convertisseurs.
Habituellement, on utilise un filtre pour réduire les perturbations générées. Le filtre peut être composé de composants passifs et/ou actifs. Dans une solution de filtrage à composants passifs, celle-ci doit être dimensionnée pour :

- Entraîner une atténuation nécessaire des perturbations en vue de respecter des seuils standards prédéfinis de perturbations électromagnétiques,
- Garantir que son inductance de mode commun ne soit jamais saturée.

Pour filtrer ces tensions de mode commun, le filtre CEM présent en entrée est souvent surdimensionné pour répondre à ces deux contraintes et répondre ainsi au cas le plus défavorable de saturation du noyau magnétique de l'inductance du filtre.
C'est ainsi qu'il a été proposé d'agir sur l'origine des perturbations de manière à réduire les besoins en filtrage.
Dans une installation réalisée selon une architecture à redresseur actif telle que décrite ci-dessus, différentes solutions ont ainsi été développées pour réduire le courant de mode commun. Ces solutions consistent par exemple en une action sur les commandes du redresseur et de l'onduleur.
Le document JP2003018853 propose par exemple une méthode pour réduire le courant de mode commun dans un variateur de vitesse en synchronisant la commutation à la fermeture (ou à l'ouverture) de trois transistors de puissance (hauts ou bas) de l'étage redresseur avec la commutation à la fermeture (ou à l'ouverture) des trois transistors correspondants (respectivement hauts ou bas) de l'étage onduleur. Cette solution permet de réduire la dimension du filtre employé pour filtrer le courant de mode commun et donc de diminuer les coûts du convertisseur.
Le brevet US6,185,115 décrit également une méthode permettant de synchroniser les commutations de l'étage redresseur avec les commutations de l'étage onduleur de manière à réduire la tension de mode commun. La méthode proposée consiste à synchroniser la commutation d'un seul bras de commutation de l'étage onduleur, en front montant et descendant, avec la commutation d'un seul bras de commutation de l'étage redresseur ce qui permet, pour une période de découpage, de passer seulement de douze fronts de tension à huit fronts de tension sur tous les bras de commutation.
La demande de brevet EP2442436A2 décrit également une méthode de synchronisation des commutations entre l'étage redresseur et l'étage onduleur. La méthode permet de synchroniser chaque commutation d'un transistor de l'étage redresseur avec une commutation de l'étage onduleur, permettant ainsi de réduire la tension de mode commun totale générée.

Cependant, les solutions décrites dans ces brevets antérieurs ne sont pas forcément satisfaisantes et ne peuvent pas s'appliquer pour des installations de commande qui présentent une architecture à au moins deux convertisseurs en parallèle connectés à un même bus continu d'alimentation.

Les documents brevets US2011/122661A1 et US2011/260656A1 proposent des solutions de synchronisation d'impulsions entre deux convertisseurs connectés en parallèle qui utilisent une modification de la porteuse.

Le but de l'invention est donc de proposer un procédé de commande qui permette :

- De limiter au maximum la génération de tension de mode commun de manière à employer un filtre de mode commun dimensionné de manière adaptée,
- De s'adapter à des installations de commande à au moins deux convertisseurs connectés en parallèle à un même bus continu d'alimentation et destinés chacun à la commande d'un moteur électrique distinct.

**Exposé de l'invention**

Ce but est atteint par un procédé de commande mis en œuvre pour une installation de commande de moteur électrique selon la revendication 1, ladite installation de commande comportant :

- Un premier convertisseur comportant des bras de commutation commandés pour appliquer des impulsions de tension comprenant chacune un front de tension montant et un front de tension descendant, à un premier moteur électrique connecté audit premier convertisseur par des premières phases de sortie,
- Un deuxième convertisseur comportant des bras de commutation commandés pour appliquer des impulsions de tension comprenant chacune un front de tension montant et un front de tension descendant, à un deuxième moteur électrique connecté audit deuxième convertisseur par des deuxièmes phases de sortie,
- Pour chaque impulsion de tension, le front de tension montant et le front de tension descendant sont déterminés à partir d'une modulation à largeur d'impulsion de type intersective entre une porteuse de type asymétrique et deux modulantes,
- le procédé de commande comportant une étape de synchronisation des impulsions en vue de minimiser les courants de mode commun générés par ladite installation,

Ledit procédé étant caractérisé en ce que l'étape de synchronisation consiste, sur une période de découpage, à :

- Positionner des impulsions en déterminant pour chaque impulsion les deux modulantes nécessaires à son positionnement,
- Déterminer, sur une période de découpage, les modulantes de sorte que pour une impulsion de tension à générer par la commande d'un bras de commutation du premier convertisseur, la génération du front de tension montant pour cette impulsion coïncide avec la génération d'un front de tension descendant d'une impulsion à générer par un bras de commutation du deuxième convertisseur et la génération du front de tension descendant de cette impulsion coïncide avec la génération d'un front de tension montant d'une autre impulsion à générer par un autre bras de commutation du deuxième convertisseur.

Selon une particularité, l'étape de synchronisation consiste, sur une période de découpage, à :

- Synchroniser les fronts de tension montants des impulsions de tension générées sur les phases de sortie du premier convertisseur avec des fronts de tension descendants des impulsions de tension générées sur les phases de sortie du deuxième convertisseur, et
- Synchroniser les fronts de tension descendants des impulsions de tension générées sur les phases de sortie du premier convertisseur avec des fronts de tension montants des impulsions de tension générées sur les phases de sortie du deuxième convertisseur.

Selon une autre particularité, le procédé consiste à caractériser chaque impulsion formée comme une succession d'états de la manière suivante :

- Une impulsion désignée 0-1-0 qui correspond à la succession de l'état logique 0, de l'état logique 1 et de l'état logique 0 comporte un front de tension montant suivi d'un front de tension descendant,
- Une impulsion désignée 1-0-1 qui correspond à la succession de l'état logique 1, de l'état logique 0 et de l'état logique 1 comporte un front de tension descendant suivi d'un front de tension montant, et en ce que :

- Les deux modulantes définissant l'impulsion de type 0-1-0 sont reliées par la relation suivante :

$$m_1 = m_2 + 2\alpha$$

- Dans laquelle $\alpha$ correspond au rapport cyclique de l'impulsion et m1 et m2 sont lesdites deux modulantes de l'impulsion de type 0-1-0,
- Les deux modulantes définissant l'impulsion de type 1-0-1 sont reliées par la relation suivante :

$$m_3 = m_4 + 2\beta$$

- Dans laquelle $\beta$ est le rapport cyclique de l'impulsion de type 1-0-1
- le rapport cyclique $\beta$ de l'impulsion 1-0-1 étant lié au rapport cyclique de l'impulsion 0-1-0 par la relation suivante :

$$\beta = 1 - \alpha$$

Selon une autre particularité, le procédé comporte une étape de détection des modulantes en surmodulation en vue de déterminer un nombre de bras de commutation bloqué dans chaque convertisseur.

Selon une autre particularité, le procédé comporte une étape de détermination d'un nombre de synchronisation possible en fonction du nombre de bras de commutation bloqué dans chaque convertisseur.

L'invention concerne également un système de commande mis en œuvre pour une installation de commande de moteur électrique selon la revendication 6, ladite installation de commande comportant :

- Un premier convertisseur comportant des bras de commutation commandés pour appliquer des premiers fronts de tension à un premier moteur électrique connecté audit premier convertisseur par des premières phases de sortie,
- Un deuxième convertisseur comportant des bras de commutation commandés pour appliquer des deuxièmes fronts de tension à un deuxième moteur électrique connecté audit deuxième convertisseur par des deuxièmes phases de sortie,
- Pour chaque impulsion de tension, le front de tension montant et le front de tension descendant sont déterminés à partir d'une modulation à largeur d'impulsion de type intersective entre une porteuse de type asymétrique et deux modulantes, le système comportant un module logiciel de synchronisation des premiers fronts de tension avec les deuxièmes fronts de tension en vue de minimiser les courants de mode commun générés par ladite installation et étant caractérisé en ce que ledit module logiciel de synchronisation est apte à :

- Positionner des impulsions en déterminant pour chaque impulsion les deux modulantes nécessaires à son positionnement,
- Déterminer, sur une période de découpage, les modulantes de sorte que pour une impulsion de tension à générer par la commande d'un bras de commutation du premier convertisseur, la génération du front de tension montant pour cette impulsion coïncide avec la génération d'un front de tension descendant d'une impulsion à générer par un bras de commutation du deuxième convertisseur et la génération du front de tension descendant de cette impulsion coïncide avec la génération d'un front de tension montant d'une autre impulsion à générer par un autre bras de commutation du deuxième convertisseur.

Selon une particularité, le module de synchronisation est exécuté pour :

- Synchroniser les fronts de tension montants des impulsions de tension générées sur les phases de sortie du premier convertisseur avec des fronts de tension descendants des impulsions de tension générées sur les phases de sortie du deuxième convertisseur, et
- Synchroniser les fronts de tension descendants des impulsions de tension générées sur les phases de sortie du premier convertisseur avec des fronts de tension montants des impulsions de tension générées sur les phases de sortie du deuxième convertisseur.

Selon une autre particularité, il consiste à caractériser chaque impulsion formée comme une succession d'états de la manière suivante :

- Une impulsion désignée 0-1-0 qui correspond à la succession de l'état logique 0, de l'état logique 1 et de l'état logique 0 comporte un front de tension montant suivi d'un front de tension descendant,
- Une impulsion désignée 1-0-1 qui correspond à la succession de l'état logique 1, de l'état logique 0 et de l'état logique 1 comporte un front de tension descendant suivi d'un front de tension montant, et en ce que :
- Les deux modulantes définissant l'impulsion de type 0-1-0 sont reliées par la relation suivante :

$$m_1 = m_2 + 2\alpha$$

- Dans laquelle $\alpha$ correspond au rapport cyclique de l'impulsion et m1 et m2 sont lesdites deux modulantes de l'impulsion de type 0-1-0,
- Les deux modulantes définissant l'impulsion de type 1-0-1 sont reliées par la relation suivante :

$$m_3 = m_4 + 2\beta$$

- Dans laquelle $\beta$ est le rapport cyclique de l'impulsion de type 1-0-1
- le rapport cyclique $\beta$ de l'impulsion 1-0-1 étant lié au rapport cyclique de l'impulsion 0-1-0 par la relation suivante :

$$\beta = 1 - \alpha$$

Selon une autre particularité, le système un module de détection des modulantes en surmodulation en vue de déterminer un nombre de bras de commutation bloqués dans chaque convertisseur.

Selon une autre particularité, le système comporte un module de détermination d'un nombre de synchronisation possible en fonction du nombre de bras de commutation bloqués dans chaque convertisseur.

**Brève description des figures**

D'autres caractéristiques et avantages vont apparaître dans la description détaillée qui suit faite en regard des dessins annexés dans lesquels :

- La figure 1A représente une installation de commande pour laquelle le procédé de commande de l'invention est mis en œuvre.
- La figure 1B représente une variante à l'installation de commande de la figure 1 à laquelle le procédé de commande de l'invention peut être appliqué.
- La figure 2 illustre les courants de mode commun générés dans une installation de commande telle que représentée sur la figure 1A.
- Les figures 3A et 3B illustrent, respectivement le principe de fonctionnement d'une modulation intersective classique et celui d'une modulation intersective employant une porteuse et deux modulantes.
- Les figures 4A et 4B illustrent les deux types d'impulsions pouvant être générées par une modulation intersective.
- La figure 5 illustre l'implémentation du procédé de commande de l'invention dans une installation de commande telle que celle représentée sur la figure 1A.
- La figure 6 représente le principe d'une synchronisation totale des impulsions, obtenue grâce au procédé de commande de l'invention.
- La figure 7 représente le principe d'une synchronisation obtenue grâce au procédé de commande de l'invention, lorsqu'un bras de commutation d'un convertisseur est bloqué.
- La figure 8 représente le principe d'une synchronisation obtenue grâce au procédé de commande de l'invention, lorsque deux bras de commutation appartenant à des convertisseurs différents sont bloqués.
- La figure 9 représente le principe d'une synchronisation obtenue grâce au procédé de commande de l'invention, lorsque deux bras de commutation d'un même convertisseur sont bloqués.
- La figure 10 représente le principe d'une synchronisation obtenue grâce au procédé de commande de l'invention, lorsqu'un bras de commutation d'un convertisseur et deux bras de commutation de l'autre convertisseurs sont bloqués.
- La figure 11 représente le principe d'une synchronisation obtenue grâce au procédé de commande de l'invention, lorsque deux bras de commutation d'un convertisseur et deux bras de commutation de l'autre convertisseur sont bloqués.
- La figure 12 illustre de manière schématique le principe de sélection du mode de synchronisation.

**Description détaillée d'au moins un mode de réalisation**

L'invention vise à proposer un procédé de commande qui pourra s'adapter à des architectures qui présentent au moins deux convertisseurs.

Pour simplifier, l'invention sera décrite ci-dessous pour des installations à deux convertisseurs mais il faut comprendre que le principe pourra s'appliquer pour des installations à plus de deux convertisseurs. Les particularités de fonctionnement liées à une installation à plus de deux convertisseurs seront détaillées par la suite.

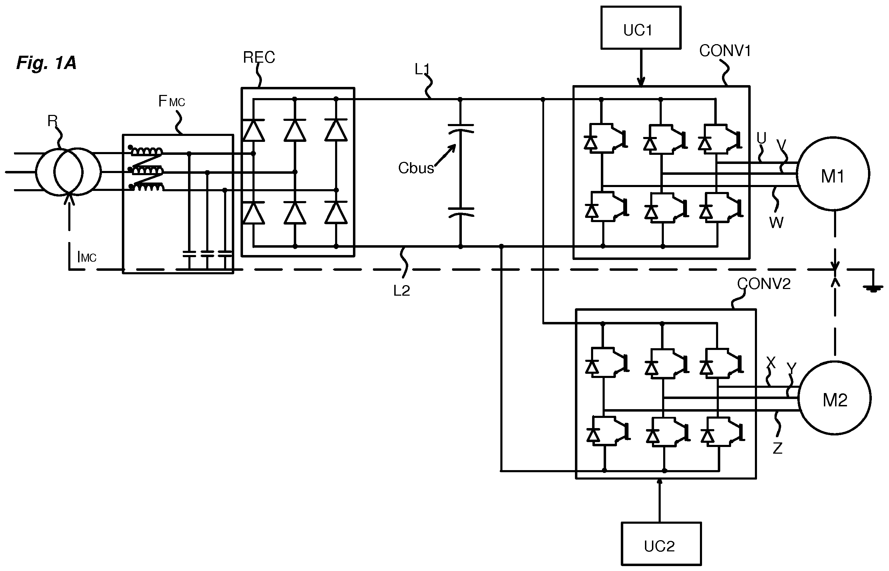

En référence à la figure 1A, une première variante d'une installation à deux convertisseurs connectés en parallèle à un même bus continu d'alimentation comporte ainsi :

- Une source de tension fournissant une tension continue. La source de tension continue sera par exemple composée d'un redresseur REC connecté à un réseau électrique R et destiné à redresser une tension alternative fournie par ce réseau.
- Un bus continu d'alimentation doté d'une première ligne d'alimentation L1 à potentiel positif et d'une seconde ligne d'alimentation L2 à potentiel négatif entre lesquelles est appliquée la tension continue.
- Au moins un condensateur de bus Cbus connecté entre la première ligne d'alimentation L1 et la seconde ligne d'alimentation L2 et destiné à maintenir constante la tension continue sur le bus.
- Un premier convertisseur CONV1 de type onduleur connecté au bus continu d'alimentation et comprenant plusieurs bras de commutation connectés en parallèle entre les deux lignes d'alimentation. Chaque bras de commutation comporte au moins deux transistors, par exemple de type IGBT, connectés en série.
- Des premières phases de sortie U, V, W, chaque première phase de sortie étant connectée à un point milieu situé entre deux transistors d'un bras de commutation distinct du premier convertisseur de manière à être relié à un premier moteur électrique M1.
- Un deuxième convertisseur CONV2 de type onduleur connecté au bus continu d'alimentation, en parallèle du premier convertisseur CONV1, et comprenant également plusieurs bras de commutation connectés en parallèle entre les deux lignes d'alimentation. Chaque bras de commutation comporte au moins deux transistors, par exemple de type IGBT, connectés en série.
- Des deuxièmes phases de sortie X, Y, Z, chaque deuxième phase de sortie étant connectée à un point milieu situé entre deux transistors d'un bras de commutation distinct du deuxième convertisseur de manière à être relié à un deuxième moteur électrique M2.

Un filtre de mode commun $F_{MC}$ est également positionné en entrée, en amont du redresseur pour filtrer les tensions de mode commun générées. L'un des objectifs du procédé de l'invention est de pouvoir réduire les tensions de mode commun dès leur origine et permettre ainsi d'éviter tout surdimensionnement de ce filtre.

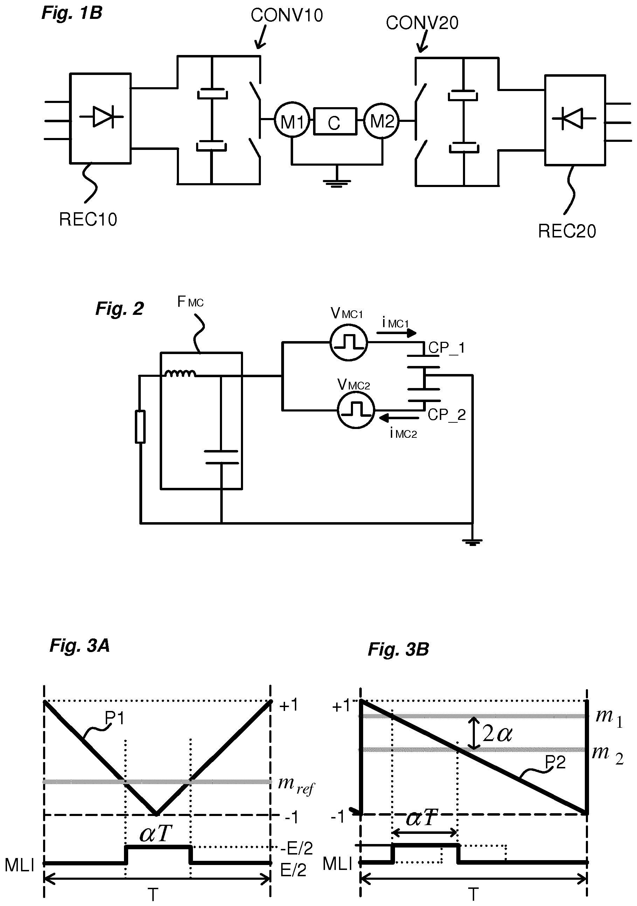

Dans une deuxième variante de réalisation représentée sur la figure 1B, deux variateurs de vitesse sont destinés à commander chacun un moteur électrique M1, M2 distinct, les deux moteurs électriques étant associés dans l'entraînement d'une même charge C. Dans cette installation, les deux convertisseurs CONV10, CONV20 sont connectés de manière indépendante au réseau à travers un redresseur distinct REC10, REC20.

Dans la suite de la description, l'invention sera décrite pour une installation à deux convertisseurs connectés en parallèle à un même bus continu d'alimentation, telle que représentée sur la figure 1A. Cependant, il faut comprendre que l'invention pourra s'appliquer aussi à une installation telle que celle représentée sur la figure 1B.

Pour la commande de ces convertisseurs CONV1, CONV2, l'installation représentée sur la figure 1A comporte un système de commande adapté. Le système de commande pourra comporter une unité de commande commune à tous les convertisseurs ou une unité de commande distincte associée à chaque convertisseur. Dans la suite de la description et de manière non limitative, nous considérerons une solution dans laquelle une unité de commande distincte est dédiée à la commande d'un convertisseur particulier. Deux unités de commande UC1, UC2 distinctes sont ainsi employées pour commander respectivement le premier convertisseur CONV1 et le deuxième convertisseur CONV2 de l'installation selon l'architecture de la figure 1A. Chaque unité de commande est destinée à commander les transistors du convertisseur auquel elle est associée entre un état ouvert et un état fermé pour appliquer des tensions sur les phases de sortie, lesdites tensions étant déterminées en exécutant une loi de commande spécifique. Chaque transistor est associé à un dispositif de commande de grille qui reçoit les ordres de commande de son unité de commande. Chaque unité de commande comporte notamment un microprocesseur et des moyens de mémorisation. Les deux unités de commande UC1, UC2 sont avantageusement connectées entre elles de manière à pouvoir synchroniser leurs ordres de commande.

Le procédé de commande de l'invention s'applique préférentiellement à une installation dont le premier convertisseur CONV1 et le deuxième convertisseur CONV2 comportent un même nombre de bras de commutation, par exemple trois bras de commutation, chaque bras comportant au moins deux transistors de puissance. Préférentiellement, le nombre de niveaux du premier convertisseur est identique au nombre de niveaux du deuxième convertisseur. Sur la figure 1A et de manière non limitative, le premier convertisseur CONV1 et le deuxième convertisseur CONV2 sont à deux niveaux. Bien entendu, le premier convertisseur et le deuxième convertisseur pourraient avoir des topologies différentes.

Dans la suite de la description, l'invention est décrite pour des convertisseurs DC/AC triphasés identiques à deux niveaux. Bien entendu, il faut comprendre que l'invention pourra s'appliquer pour des topologies différentes, en effectuant des adaptations dans le procédé de commande de l'invention qui sera décrit ci-dessous.

La figure 2 représente l'installation de commande de la figure 1 de manière simplifiée en faisant ressortir les perturbations de mode commun fournies par chacun des convertisseurs. Le courant de mode commun généré peut emprunter différents chemins entre le système et chaque moteur électrique. Ces chemins sont créés par des couplages capacitifs générés :

- Entre les conducteurs du câble reliant chaque convertisseur à sa charge électrique,
- Entre les enroulements du moteur et le stator, et
- Entre les transistors de chaque convertisseur et le dissipateur relié à la terre.

Lorsque l'installation comporte ainsi deux convertisseurs, la tension de mode commun totale est la somme des perturbations fournies par chacun des convertisseurs.

On a ainsi :

$$V_{MC\_1} = \frac{V_{UO} + V_{VO} + V_{WO}}{3} \text{ et } V_{MC\_2} = \frac{V_{XO} + V_{YO} + V_{ZO}}{3}$$

Dans lesquelles :

- Vuo, Vvo, Vwo correspondent aux tensions simples sur les phases de sortie U, V, W du premier convertisseur, référencées au point bas (O) du bus continu d'alimentation,

- $V_{X0}$, $V_{Y0}$, $V_{Z0}$ correspondent aux tensions simples sur les phases de sortie du deuxième convertisseur, référencées au point bas (O) du bus continu d'alimentation.

On peut aussi exprimer le courant de mode commun total $i_{MC}$ généré par les deux convertisseurs en fonctionnement en fonction de $V_{MC\_1}$ et $V_{MC\_2}$ :

$$i_{MC} = i_{MC\_1} + i_{MC\_2}$$

$$i_{MC} = C_{p\_1} \frac{dV_{MC\_1}}{dt} + C_{p\_2} \frac{dV_{MC\_2}}{dt}$$

Dans lesquelles $C_{p\_1}$ et $C_{p\_2}$ représentent les deux capacités parasites entre chaque ensemble convertisseur+moteur+câble d'alimentation du moteur et la terre.

Sous l'hypothèse que les moteurs et les câbles d'alimentation sont identiques, on peut considérer que les deux capacités parasites sont égales, on obtient alors :

$$i_{MC} = C_p \left( \frac{dV_{MC\_1}}{dt} + \frac{dV_{MC\_2}}{dt} \right)$$

Avec : $C_p = C_{P\_1} = C_{P\_2}$

L'objectif étant de réduire, voire d'éliminer le courant de mode commun total généré, on en déduit alors :

$$i_{MC} = C_p \left( \frac{dV_{MC\_1}}{dt} + \frac{dV_{MC\_2}}{dt} \right) = 0 \Rightarrow \frac{dV_{MC\_1}}{dt} = -\frac{dV_{MC\_2}}{dt}$$

On comprend ainsi qu'en synchronisant des fronts de tension (dV/dt) de nature opposée de chaque convertisseur, le générateur des courants de mode commun qu'est la tension de mode commun de l'ensemble des deux convertisseurs sera nul, provoquant de ce fait l'absence de courant. La réduction des perturbations électromagnétiques est ainsi obtenue en synchronisant deux fronts de tension opposés de chaque convertisseur.

Le principe de l'invention est donc de compenser la tension de mode commun générée par le premier convertisseur CONV1 par la tension de mode commun générée par le deuxième convertisseur CONV2, ou inversement.

Ainsi, théoriquement, il s'agit de réaliser des doubles commutations entre le premier convertisseur et le deuxième convertisseur de sorte que la génération d'un front de tension montant ou d'un front de tension descendant réalisée par la commutation d'un bras de commutation du premier convertisseur coïncide avec la génération d'un front de tension descendant, respectivement montant, réalisée par la commutation d'un bras de commutation du deuxième convertisseur. Plus précisément, pour une impulsion générée par la commande d'un bras de commutation du premier convertisseur, la génération du front de tension montant pour cette impulsion coïncide avec la génération d'un front de tension descendant d'une impulsion générée par un bras de commutation du deuxième convertisseur et la génération du front de tension descendant de cette impulsion coïncide avec la génération d'un front de tension montant d'une autre impulsion qui est donc générée par un autre bras de commutation du deuxième convertisseur. La synchronisation des deux fronts (montant et descendant) réalisée par un bras de commutation du premier convertisseur s'effectue donc avec deux bras de commutation différents du deuxième convertisseur. De cette manière, il sera ainsi possible de réaliser une synchronisation totale de toutes les commutations en respectant un algorithme décrit ci-dessous.

Pour déterminer les changements d'états et les instants de commutation de chaque transistor des deux convertisseurs, il est connu qu'une unité de traitement met en œuvre une modulation en largeur d'impulsion de type intersective (ci-après MLI et nommé PWM pour « Pulse Width Modulation » en anglais). Une MLI de type intersective consiste à comparer une porteuse triangulaire symétrique ou asymétrique avec une ou plusieurs modulantes. Pour une phase de sortie du convertisseur, les intersections entre une porteuse et une ou plusieurs modulantes génèrent des impulsions de tension sur la phase de sortie dont les fronts montants et les fronts descendants correspondent aux instants de commutation des transistors du bras de commutation associé à ladite phase. Sur un bras de commutation, les deux transistors sont commandés en complémentaire, c'est-à-dire que lorsque l'un des transistors est à l'état fermé, l'autre est à l'état ouvert et inversement.

Comme représenté sur la figure 3A, une modulation intersective classique consiste ainsi à comparer une porteuse P1 triangulaire avec une modulante de référence $m_{ref}$ de manière à définir une impulsion de tension. Sur la période de découpage T de la porteuse, cette impulsion a une largeur d'impulsion qui correspond au produit entre le rapport cyclique $\alpha$ et la durée de la période de découpage T.

L'invention vise à synchroniser des fronts montants et des fronts descendants des impulsions générées par la MLI de commande du premier convertisseur et par la MLI de commande du deuxième convertisseur. Dans le cadre de l'invention, pour déplacer de manière indépendante un front montant et un front descendant d'une même impulsion, il s'agit d'employer pour chaque convertisseur une MLI de type intersective qui comporte une porteuse P2 de type asymétrique en dents de scie et deux modulantes $m_1$, m2 (figure 3B).

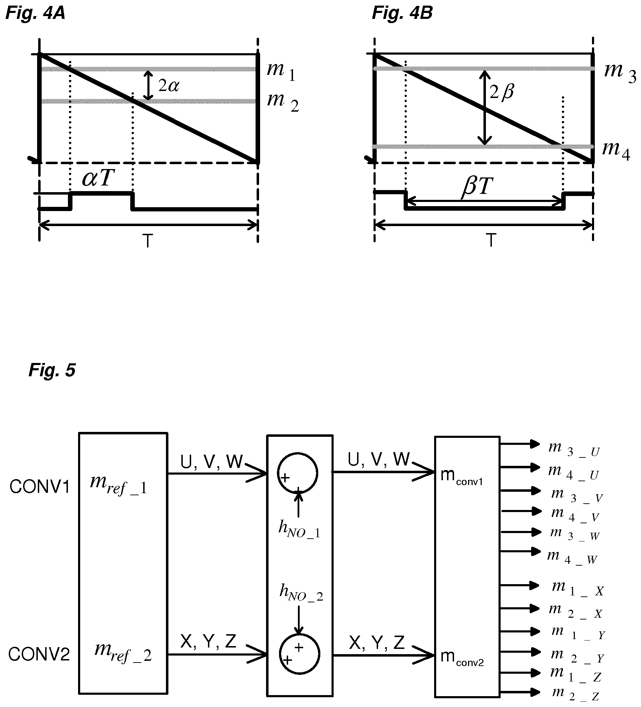

Comme représenté sur les figures 4A et 4B, chaque impulsion formée par la MLI peut se décrire comme une succession d'états. Il s'agit en effet :

- De la succession de l'état logique 0, de l'état logique 1 et de l'état logique 0 pour une impulsion désignée ci-après 0-1-0 qui comporte ainsi un front de tension montant suivi d'un front de tension descendant (figure 4A), ou
- De la succession de l'état logique 1, de l'état logique 0 et de l'état logique 1 pour une impulsion désignée ci-après 1-0-1 qui comporte ainsi un front de tension descendant suivi d'un front de tension montant (figure 4B).

En référence à la figure 4A, sur une période de découpage de la porteuse P2, les instants de commutation qui définissent l'impulsion 0-1-0 définie ci-dessus sont déterminés à partir de deux modulantes $m_1$, m2.

L'intersection de la modulante $m_1$ avec la porteuse P2 détermine un instant à partir duquel l'impulsion passe de l'état logique 0 à l'état logique 1, formant un front de tension montant.

L'intersection de la modulante m2 avec la porteuse P2 détermine un instant à partir duquel l'impulsion passe de l'état logique 1 à l'état logique 0, formant un front de tension descendant.

Les deux modulantes $m_1$, m2 sont liées par le rapport cyclique $\alpha$ de l'impulsion de sorte que :

$$m_1 = m_2 + 2\alpha$$

Sur une période de découpage, comme représenté sur la figure 4B, il est également possible de caractériser l'impulsion 1-0-1 définie ci-dessus en créant deux modulantes $m_3$, $m_4$ qui vont définir les instants des changements d'état logique de cette impulsion.

L'intersection de la modulante m3 avec la porteuse P2 détermine un instant à partir duquel l'impulsion passe de l'état logique 1 à l'état logique 0, formant un front de tension descendant.

L'intersection de la modulante $m_4$ avec la porteuse P2 détermine un instant à partir duquel l'impulsion passe de l'état logique 0 à l'état logique 1, formant un front de tension montant.

De même, les deux modulantes $m_3$, $m_4$ sont liées par le rapport cyclique $\beta$ de l'impulsion de sorte que :

$$m_3 = m_4 + 2\beta$$

Pour la commutation d'un même bras de commutation, on peut déterminer la relation entre une impulsion de type 0-1-0 et une impulsion de type 1-0-1. La largeur de l'impulsion 0-1-0 obtenue est définie par le produit entre le rapport cyclique de commutation $\alpha$ de l'impulsion 0-1-0 et la période de découpage T, c'est-à-dire qu'elle vaut $\alpha$T.

Sur la période de découpage T, la largeur de l'impulsion 1-0-1 vaut de la même manière $\beta$T.

On en déduit que le rapport cyclique $\beta$ de l'impulsion 1-0-1 est lié au rapport cyclique de l'impulsion 0-1-0 par la relation suivante :

$$\beta = 1 - \alpha$$

La modulante m3 peut alors être également caractérisée en fonction du rapport cyclique $\alpha$ de la manière suivante :

$$m_3 = m_4 + 2\beta = m_4 + 2(1 - \alpha)$$

A partir de ces éléments, il est ainsi possible de déterminer toutes les modulantes qui permettent de synchroniser un front montant d'une impulsion pour une phase du premier convertisseur avec un front descendant d'une impulsion pour une phase du deuxième convertisseur. Plus précisément, il s'agit de :

- Synchroniser les fronts montants des impulsions de type 0-1-0 générées sur les phases de sortie du premier convertisseur CONV1 avec des fronts descendants des impulsions de type 1-0-1 générées sur les phases de sortie du deuxième convertisseur CONV2, et

- Synchroniser les fronts descendants des impulsions de type 0-1-0 générées sur les phases de sortie du premier convertisseur CONV1 avec des fronts montants des impulsions de type 1-0-1 générées sur les phases de sortie du deuxième convertisseur CONV2.

L'inverse est également possible, c'est-à-dire :

- Synchroniser les fronts montants des impulsions de type 1-0-1 générées sur les phases de sortie U, V, W du premier convertisseur CONV1 avec des fronts descendants des impulsions de type 0-1-0 générées sur les phases de sortie X, Y, Z du deuxième convertisseur CONV2, et

- Synchroniser les fronts descendants des impulsions de type 1-0-1 générées sur les phases de sortie U, V, W du premier convertisseur CONV1 avec des fronts montants des impulsions de type 0-1-0 générées sur les phases de sortie X, Y, Z du deuxième convertisseur CONV2.

Pour cela, on utilisera les relations définies ci-dessus qui permettent de caractériser les impulsions de type 0-1-0 et les impulsions de type 1-0-1.

De manière plus concrète, la figure 5 illustre le principe de mise en œuvre du procédé de commande de l'invention. Cette figure décrit les différents blocs qui génèrent les impulsions MLI de chaque convertisseur CONV1, CONV2 de l'installation. Pour le premier moteur M1, la loi de commande exécutée par la première unité de commande UC1 génère, pour chaque phase U, V, W, une modulante de référence $m_{ref\_1}$. Pour le deuxième moteur M2, la loi de commande exécutée par la deuxième unité de commande UC2 génère, pour chaque phase X, Y, Z, une modulante de référence $m_{ref\_2}$. Pour l'extension de linéarité dans la commande du premier convertisseur, la première unité de commande ajoute, pour chaque phase U, V, W, une composante homopolaire $h_{NO\_1}$ à la modulante de référence $m_{ref\_1}$. Pour l'extension de linéarité dans la commande du deuxième convertisseur, la deuxième unité de commande UC2 ajoute, pour chaque phase X, Y, Z, une composante homopolaire $h_{NO\_2}$ à la modulante de référence $m_{ref\_2}$. On obtient ainsi, pour chaque phase de chaque convertisseur une modulante $m_{conv1}$, $m_{conv2}$.

Le procédé de commande de l'invention est ensuite exécuté de manière à placer de manière optimale, sur la période de découpage, les impulsions définies par les modulantes $m_{conv1}$, $m_{conv2}$ pour chaque phase. Pour positionner ces impulsions, celles-ci sont définies par le procédé de l'invention de la manière décrite ci-dessus, c'est-à-dire en déterminant les deux modulantes nécessaires à la caractérisation d'une impulsion de type 0-1-0 ou de type 1-0-1. Le procédé de commande de l'invention détermine ainsi, pour chaque phase U, V, W du premier convertisseur, les modulantes $m_{3\_U}$, $m_{4\_U}$, $m_{3\_V}$, $m_{4\_v}$, $m_{3\_w}$, $m_{4\_w}$ et pour chaque phase X, Y, Z du deuxième convertisseur les modulantes $m_{1\_X}$, $m_{2\_X}$, $m_{1\_Y}$, $m_{2\_Y}$, $m_{1\_Z}$, $m_{2\_Z}$.

Pour réaliser une synchronisation totale, la première unité de commande UC1 et la deuxième unité de commande UC2 sont donc configurées de manière à pouvoir déplacer dans le temps chaque impulsion de tension générée par les bras de commutation, respectivement du premier convertisseur CONV1 et du deuxième convertisseur CONV2. Préférentiellement, la première unité de commande UC1 ou la deuxième unité de commande met en œuvre un module logiciel de synchronisation destiné à exécuter chaque algorithme décrit ci-dessous. Grâce au module de synchronisation, l'unité de commande (par exemple la première unité de commande UC1) détermine toutes les modulantes à appliquer dans la MLI dédiée au premier convertisseur et la MLI dédiée au deuxième convertisseur en vue de mettre en place la synchronisation adaptée selon l'un des algorithmes décrits ci-dessous. Pour cela, la première unité de commande UC1 aura préalablement reçu de la deuxième unité de commande UC2 la modulante $m_{conv2}$ définissant les impulsions à appliquer sur chaque phase du deuxième convertisseur CONV2.

Préférentiellement, en vue de réaliser la synchronisation, le procédé de commande de l'invention consiste à déterminer le nombre de synchronisation possible entre les bras de commutation du premier convertisseur CONV1 et les bras de commutation du deuxième convertisseur CONV2. Une synchronisation totale de tous les fronts de tension est liée à certaines conditions préalables :

- La fréquence de découpage de la MLI du premier convertisseur CONV1 et la fréquence de découpage de la MLI du deuxième convertisseur CONV2 doivent être identiques.

- La fréquence de découpage de la MLI du premier convertisseur CONV1 et la fréquence de découpage de la MLI du deuxième convertisseur CONV2 doivent être synchrones pour pouvoir placer les fronts de tension les uns par rapport aux autres.

- Le premier convertisseur CONV1 et le deuxième convertisseur CONV2 doivent avoir le même nombre de fronts à synchroniser sur une période relative d'un convertisseur à l'autre.

Par ailleurs, comme évoqué ci-dessus, on a aussi, pour chaque convertisseur CONV1, CONV2, les prérequis généraux suivants :

$$m = m_{ref} + h_{NO}$$

$$\Rightarrow \quad \alpha = \frac{m+1}{2}$$

$$\Rightarrow \quad \beta = \frac{1-m}{2}$$

Avec :

- $m_{ref}$ qui correspond à la modulante de référence ($M_{ref\_1}$ ou $m_{ref\_2}$) évoquée ci-dessus et issue de la loi de commande du moteur.
- $m$ qui correspond à la modulante ($m_{conv1}$ ou $m_{conv2}$) évoquée ci-dessus, c'est-à-dire à la modulante de référence à laquelle on a rajouté la composante homopolaire et qui définit les rapports cycliques des impulsions à appliquer.
- $\alpha$, $\beta$ qui définissent un rapport cyclique par rapport à la période (T) de découpage.
- $h_{NO}$ qui correspond à la composante homopolaire ($h_{NO\_1}$ ou $h_{NO\_2}$), utilisées pour l'extension de linéarité.

Ainsi, selon les conditions de fonctionnement, une synchronisation totale de tous les fronts de tension ne sera possible que si les expressions ci-dessous sont vérifiées :

$$\alpha_X - \beta_V + \alpha_Y - \beta_W + \alpha_Z - \beta_U = 0$$

$$\Leftrightarrow \frac{3}{2}(1 + h_{NO\_1}) = \frac{3}{2}(1 - h_{NO\_2})$$

$$\Leftrightarrow h_{NO\_1} = -h_{NO\_2}$$

Avec :

- $\beta_U$, $\beta_V$, $\beta_W$ les rapports cycliques des impulsions de type 1-0-1 sur les phases de sortie X, Y, Z du deuxième convertisseur.
- $\alpha_X$, $\alpha_Y$, $\alpha_Z$ les rapports cycliques des impulsions de type 0-1-0 sur les phases de sortie X, Y, Z du deuxième convertisseur.
- $h_{NO\_1}$ la composante homopolaire employée dans la commande du premier convertisseur et $h_{NO\_2}$ la composante homopolaire employée dans la commande du deuxième convertisseur.

Si les différentes conditions définies ci-dessus sont remplies, une synchronisation totale des fronts de tension est mise en œuvre par le module de synchronisation exécuté l'unité de commande. Dans ce cas, le procédé de commande de l'invention applique l'algorithme décrit ci-dessous en liaison avec la figure 5. Il s'agit de déterminer chaque modulante à appliquer pour que la synchronisation soit totale. Dans cet algorithme, on a :

- $m_{1\_X}$, $m_{2\_X}$, $m_{1\_Y}$, $m_{2\_Y}$, $m_{1\_Z}$, $m_{2\_Z}$ qui représentent, pour chaque phase de sortie X, Y, Z du deuxième convertisseur, les deux modulantes à déterminer pour les impulsions de type 0-1-0 à appliquer,

- $m_{3\_U}$, $m_{4\_U}$, $m_{3\_V}$, $m_{4\_V}$, $m_{3\_W}$, $m_{4\_W}$ qui représentent, pour chaque phase de sortie U, V, W du premier convertisseur, les deux modulantes à déterminer pour les impulsions de type 1-0-1 à appliquer,

- T1 à T6 correspondent aux instants définissant chaque impulsion appliquée sur les phases de sortie U, V, W du premier convertisseur et X, Y, Z du deuxième convertisseur.

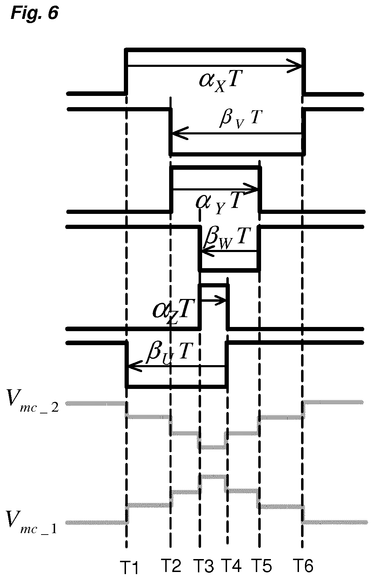

Pour obtenir la synchronisation totale, en liaison avec la figure 6, les différentes étapes mises en œuvre par le module de synchronisation pour déterminer les modulantes à appliquer sur une période de découpage T, sont alors les suivantes :

a. Choix arbitraire pour fixer un premier front de tension, par exemple le front montant de l'impulsion Vxo à appliquer sur la phase de sortie X du deuxième convertisseur à l'instant T1 (la valeur même de T1 est arbitraire) d'où :

$$m_{1\_X} = T_1 / T$$

b. Déduction de la modulante $m_{2\_X}$ à l'aide du rapport cyclique $\alpha_X$ de la modulante de la phase X du deuxième convertisseur, c'est-à-dire :

$$m_{2\_X} = m_{1\_X} - 2\alpha_X = T_6 / T$$

c. Synchronisation du front de tension descendant de la phase X avec le front de tension montant de la phase V (choix arbitraire). On obtient alors :

$$m_{4\_V} = m_{2\_X} = T_6 / T$$

d. Déduction de la modulante $m_{3\_V}$ à l'aide du rapport cyclique $\alpha_V$ de la modulante de la phase V par la relation suivante suivante :

$$m_{3\_V} = m_{4\_V} + 2(1 - \alpha_V) = T_2/T$$

**e.** Synchronisation du front de tension descendant de la phase V avec le front de tension montant de la phase Y (choix arbitraire). On obtient alors :

$$m_{1\_Y} = m_{3\_V} = T_2/T$$

**f.** Déduction de la modulante $m_{2\_Y}$ à l'aide du rapport cyclique $\alpha_Y$ de la modulante de la phase Y :

$$m_{2\_Y} = m_{1\_Y} - 2\alpha_Y = T_5/T$$

**g.** Synchronisation du front de tension descendant de la phase Y avec le front montant de la phase W (choix arbitraire) d'où :

$$m_{4\_W} = m_{2\_Y} = T_5/T$$

**h.** Déduction de la modulante m3 w à l'aide du rapport cyclique $\alpha_W$ de la modulante de la phase W :

$$m_{3\_W} = m_{4\_W} + 2(1 - \alpha_W) = T_3/T$$

**i.** Synchronisation du front de tension descendant de la phase W avec le front de tension montant de la phase Z (pas de choix) d'où :

$$m_{1\_Z} = m_{3\_W} = T_3/T$$

**j.** Déduction de la modulante m2 z à l'aide du rapport cyclique $\alpha_Z$ de la modulante de la phase Z :

$$m_{2\_Z} = m_{1\_Z} - 2\alpha_Z = T_4/T$$

**k.** Synchronisation du front de tension descendant de la phase Z avec le front de tension montant de la phase U (pas de choix) d'où :

$$m_{4\_U} = m_{2\_Z} = T_4/T$$

**l.** Enfin, sous contrainte que l'égalité des composantes homopolaires soit respectée, le front descendant FD de la phase U et le front montant FM de la phase X se synchroniseront naturellement.

Sur la figure 6, on remarque donc que la tension de mode commun $V_{MC\_1}$ résultante générée par le premier convertisseur CONV1 est l'opposée de la tension de mode commun $V_{MC\_2}$ résultante générée par le deuxième convertisseur CONV2.

Cependant, il existe deux situations pour lesquelles la synchronisation totale ne sera pas possible, c'est-à-dire :

- L'utilisation de composantes homopolaires qui ne sont pas de signes opposés. Dans ce cas, l'égalité $\alpha_X - \beta_V + \alpha_Y - \beta_W + \alpha_Z - \beta_U = 0$ ne pourra pas être respectée.

- La présence d'une surmodulation dans la commande d'un ou plusieurs bras de commutation. Dans cette situation, une ou plusieurs impulsions de l'un ou des deux convertisseurs ne varient pas sur une ou plusieurs périodes de découpage. Un bras bloqué signifie deux fronts de tension inexistants à chaque période de découpage et donc limite les possibilités de synchronisation dans l'une des deux situations décrites ci-dessus, la synchronisation ne peut pas être totale.

Dans la première situation, où la relation $h_{NO\_1} = -h_{NO\_2}$ entre les deux composantes homopolaires n'est pas respectée, les étapes a) à k) définies ci-dessus pourront être mises en œuvre mais les deux derniers fronts de tension ne se synchroniseront pas naturellement. Dans cette situation, il sera ainsi possible de synchroniser dix fronts de tension sur douze.

Dans une situation de surmodulation sur un ou sur les deux convertisseurs, l'expression $\alpha_X - \beta_V + \alpha_Y - \beta_W + \alpha_Z - \beta_U = 0$ ne peut pas non plus être respectée car le rapport cyclique du bras de commutation bloqué par la surmodulation ne représente pas la modulante de référence mais une limite de comparaison porteuse-modulante. Dans cette situation, les possibilités de synchronisation seront réduites mais on aura également l'assurance de ne pas exciter au moins partiellement les capacités parasites. Le tableau ci-dessous résume le nombre théorique de synchronisations maximales selon que le premier convertisseur et/ou le deuxième convertisseur est en surmodulation sur un ou plusieurs de ses bras de commutation :

| Convertisseur 1 | Convertisseur 2 | Nombre théorique de synchronisations maximales |
| --- | --- | --- |
| Surmodulation | Pas de surmodulation | 4 si 1 bras bloqué |
| | | 2 si 2 bras bloqués |
| Surmodulation | Surmodulation | 3 si 2 bras bloqués |
| | | 2 si 3 bras bloqués |
| | | 1 si 4 bras bloqués |

En cas de surmodulation, l'algorithme mis en place est le suivant :

- Détecter quelles sont les modulantes en sur-modulation (par exemple en comparant la valeur absolue de la modulante de référence $m_{ref}$ à 1).
- Identifier dans quelle situation de fonctionnement les convertisseurs se trouvent afin de déterminer le nombre de bras bloqués. Selon le nombre de bras bloqués, la synchronisation effectuée sera différente :

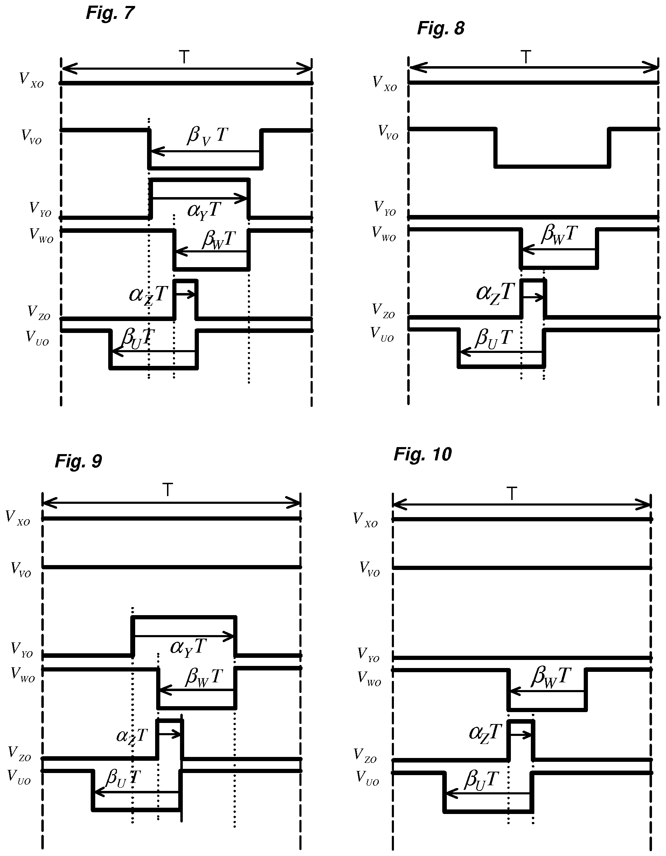

  - Un seul bras bloqué :
    Si un seul bras est bloqué sur l'un des deux convertisseurs, le procédé de commande consiste à placer de manière arbitraire le front de tension initial sur une des phases d'un bras non bloqué (phase V sur la figure 7). Ensuite les étapes e) à k) définies ci-dessus sont appliquées pour la détermination des autres modulantes.
  - Deux bras de commutation bloqués sur un même convertisseur :
    Si deux bras sont bloqués, le procédé de commande consiste à placer de manière arbitraire le front de tension initial sur une des phases d'un bras non bloqué (phase W sur la figure 8). Ensuite les étapes i) à k) définies ci-dessus sont appliquées pour la détermination des autres modulantes. Dans cette situation, on peut noter que l'une des impulsions n'est pas synchronisée. Elle est donc placée arbitrairement sur la période de découpage.
  - Deux bras de commutation bloqués sur chacun des convertisseurs :
    Si deux bras sont bloqués, le procédé de commande consiste à placer de manière arbitraire le front de tension initial sur une des phases d'un bras non bloqué (phase Y sur la figure 9). Ensuite les étapes g) à k) définies ci-dessus sont appliquées pour la détermination des autres modulantes.
  - Trois bras de commutation bloqués, deux bras sur un convertisseur et un bras sur l'autre convertisseur.

Sur toutes les phases non bloquées, les impulsions sont synchronisées. Le front de tension initial est choisi arbitrairement sur une phase non bloquée (phase W sur la figure 10). Ensuite les étapes i) à k) définies ci-dessus sont appliquées pour la détermination des autres modulantes.

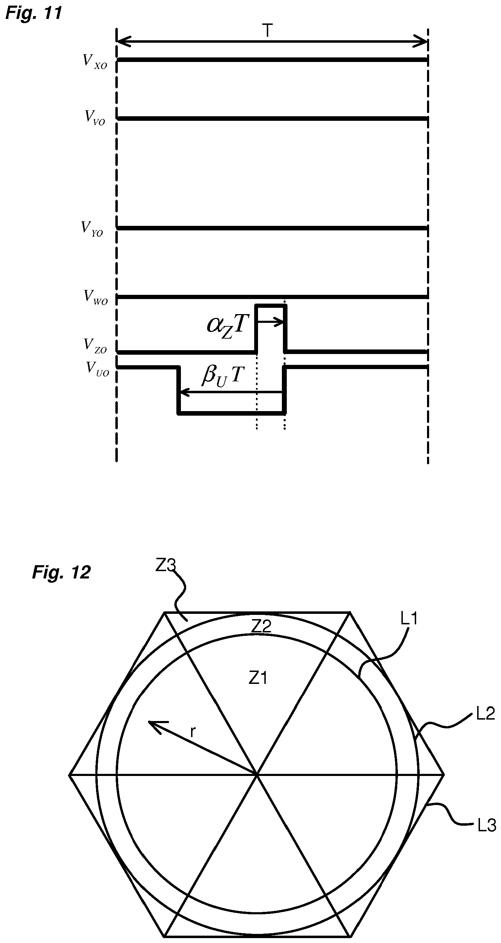

- Quatre bras de commutation bloqués, deux sur chaque convertisseur : Le front de tension initial est choisi arbitrairement sur une phase non bloquée (phase Z sur la figure 11). Ensuite les étapes i) à k) définies ci-dessus sont appliquées pour la détermination des autres modulantes.

Le procédé de commande décrit ci-dessus qui a pour objectif de synchroniser les fronts de tension des deux convertisseurs pourra être implémenté dans une application de variation de vitesse pour commander les deux moteurs électriques en parallèle, comme représenté sur les figures 1A ou 1B.

Le principe de synchronisation décrit ci-dessus repose en effet sur les tensions générées par les convertisseurs de tension de type DC/AC. Ces tensions, une fois normalisées par rapport à la tension du bus continu d'alimentation évolue en fonction de la fréquence appliquée en sortie (application d'une loi de commande de type U/f). Ainsi par exemple avec une fréquence pouvant évoluer de 0 à 100Hz l'amplitude des tensions de références normalisée (les modulantes) peut être soit :

- Comprise dans les limites fixées par la porteuse (-1 et 1 en normalisé) : on peut alors parler de comparaison linéaire car l'ensemble de la modulante est comparée à la porteuse. Cette linéarité est obtenue :

  ■ Sans l'utilisation de la composante homopolaire jusqu'à une amplitude de modulante *r* de 1 : L1 à la figure 12. Ce cas correspond par exemple à une fréquence du moteur allant de 0 à 35Hz.

  ■ Avec utilisation de la composante homopolaire jusqu'à une amplitude de modulante *r* de $\dfrac{2}{\sqrt{3}}$ : L2 à la figure 12. Ce cas correspond par exemple à une fréquence du moteur allant de 35Hz à 50Hz.
  ■ Supérieure à la porteuse : on parle alors de sur-modulation (L3 à la figure 12). Ce cas peut subvenir pour des fréquences de moteur allant par exemple au-delà de 50Hz.

Ces différentes limites peuvent être représentées dans un diagramme vectoriel tel que représenté sur la figure 12.

A partir de ce diagramme, le nombre de synchronisation possible peut être résumé dans le tableau ci-dessous :

| | | CONV2 | | | | |
|---|---|---|---|---|---|---|
| | Zones | Z1 | | Z2 | | Z3 |
| CONV1 | Z1 | 12/12 | | | | 8/10 (1 bras bloqué) 4/8 (2 bras bloqués) |
| | Z2 | 12/12 si égalité entre les composantes homopolaires | 10/12 si inégalité | 12/12 si égalité des composantes homopolaires | 10/12 si inégalité | 8/10 (1 bras bloqué) 4/8 (2 bras bloqués) |
| | Z3 | 8/10 (un bras bloqué) 4/8 (deux bras bloqués) | | 8/10 (un bras bloqué) 4/8 (deux bras bloqués) | | 6/8 (1 bras bloqué) 4/6 (3 bras bloqués) 2/4 (4 bras bloqués) |

Selon l'invention, si l'installation de commande comporte plus de deux convertisseurs, la synchronisation décrite ci-dessus sera mise en œuvre par paire.

La présente invention comporte ainsi de nombreux avantages, parmi lesquels :

- Elle traite les perturbations électromagnétiques à leur origine, ce qui permet de limiter les besoins en filtrage de l'installation.
- Elle permet de tenir compte du fonctionnement des convertisseurs, notamment des phénomènes de surmodulation en adaptant la synchronisation au nombre de bras bloqués.
- Elle permet d'obtenir la meilleure synchronisation possible selon les conditions de fonctionnement des convertisseurs.

**Revendications**

1. Procédé de commande mis en œuvre pour une installation de commande de moteur électrique, ladite installation de commande comportant :

   - Un premier convertisseur (CONV1) comportant des bras de commutation commandés pour appliquer des impulsions de tension comprenant chacune un front de tension montant et un front de tension descendant, à un premier moteur électrique (M1) connecté audit premier convertisseur par des premières phases de sortie,
   - Un deuxième convertisseur (CONV2) comportant des bras de commutation commandés pour appliquer des impulsions de tension comprenant chacune un front de tension montant et un front de tension descendant, à un deuxième moteur électrique (M2) connecté audit deuxième convertisseur par des deuxièmes phases de sortie,

- Ledit premier convertisseur et ledit deuxième convertisseur étant connectés en parallèle à un même bus continu d'alimentation fournissant une tension continue,
- Pour chaque impulsion de tension, le front de tension montant et le front de tension descendant sont déterminés à partir d'une modulation à largeur d'impulsion de type intersective entre une porteuse de type asymétrique et deux modulantes,
- le procédé de commande comportant une étape de synchronisation des impulsions en vue de minimiser les courants de mode commun générés par ladite installation,

Ledit procédé étant **caractérisé en ce que** l'étape de synchronisation consiste, sur une période de découpage, à :

- Positionner des impulsions en déterminant pour chaque impulsion les deux modulantes nécessaires à son positionnement,
- Déterminer, sur une période de découpage, les modulantes de sorte que pour une impulsion de tension à générer par la commande d'un bras de commutation du premier convertisseur, la génération du front de tension montant pour cette impulsion coïncide avec la génération d'un front de tension descendant d'une impulsion à générer par un bras de commutation du deuxième convertisseur et la génération du front de tension descendant de cette impulsion coïncide avec la génération d'un front de tension montant d'une autre impulsion à générer par un autre bras de commutation du deuxième convertisseur.

2. Procédé de commande selon la revendication 1, **caractérisé en ce que** l'étape de synchronisation consiste, sur une période de découpage, à :

- Synchroniser les fronts de tension montants des impulsions de tension générées sur les phases de sortie (U, V, W) du premier convertisseur avec des fronts de tension descendants des impulsions de tension générées sur les phases de sortie (X, Y, Z) du deuxième convertisseur, et
- Synchroniser les fronts de tension descendants des impulsions de tension générées sur les phases de sortie du premier convertisseur avec des fronts de tension montants des impulsions de tension générées sur les phases de sortie du deuxième convertisseur.

3. Procédé selon l'une des revendications 1 ou 2, **caractérisé en ce qu'**il consiste à caractériser chaque impulsion formée comme une succession d'états et **en ce que** :

- Une impulsion désignée 0-1-0 qui correspond à la succession de l'état logique 0, de l'état logique 1 et de l'état logique 0 comporte un front de tension montant suivi d'un front de tension descendant,
- Une impulsion désignée 1-0-1 qui correspond à la succession de l'état logique 1, de l'état logique 0 et de l'état logique 1 comporte un front de tension descendant suivi d'un front de tension montant, et **en ce que** :
- Les deux modulantes définissant l'impulsion de type 0-1-0 sont reliées par la relation suivante :

$$m_1 = m_2 + 2\alpha$$

- Dans laquelle $\alpha$ correspond au rapport cyclique de l'impulsion et m1 et m2 sont lesdites deux modulantes de l'impulsion de type 0-1-0,
- Les deux modulantes définissant l'impulsion de type 1-0-1 sont reliées par la relation suivante :

$$m_3 = m_4 + 2\beta$$

- Dans laquelle $\beta$ est le rapport cyclique de l'impulsion de type 1-0-1
- le rapport cyclique $\beta$ de l'impulsion 1-0-1 étant lié au rapport cyclique de l'impulsion 0-1-0 par la relation suivante :

$$\beta = 1 - \alpha$$

4. Procédé selon l'une des revendications 1 à 3, **caractérisé en ce qu'**il comporte une étape de détection des modulantes en surmodulation en vue de déterminer un nombre de bras de commutation bloqué dans chaque convertisseur.

**5.** Procédé selon la revendication 4, **caractérisé en ce qu'**il comporte une étape de détermination d'un nombre de synchronisation possible en fonction du nombre de bras de commutation bloqué dans chaque convertisseur.

**6.** Système de commande mis en œuvre pour une installation de commande de moteur électrique, ladite installation de commande comportant :

- Un premier convertisseur comportant des bras de commutation commandés pour appliquer des impulsions de tension comprenant chacune un front de tension montant et un front de tension descendant à un premier moteur électrique connecté audit premier convertisseur par des premières phases de sortie,
- Un deuxième convertisseur comportant des bras de commutation commandés pour appliquer des impulsions de tension comprenant chacune un front de tension montant et un front de tension descendant à un deuxième moteur électrique connecté audit deuxième convertisseur par des deuxièmes phases de sortie,
- Ledit premier convertisseur et ledit deuxième convertisseur étant connectés en parallèle à un même bus continu d'alimentation fournissant une tension continue,
- Pour chaque impulsion de tension, le front de tension montant et le front de tension descendant sont déterminés à partir d'une modulation à largeur d'impulsion de type intersective entre une porteuse de type asymétrique et deux modulantes,

le système comportant un module logiciel de synchronisation des premiers fronts de tension avec les deuxièmes fronts de tension en vue de minimiser les courants de mode commun générés par ladite installation et étant **caractérisé en ce que** ledit module logiciel de synchronisation est apte à :

- Positionner des impulsions en déterminant pour chaque impulsion les deux modulantes nécessaires à son positionnement,
- Déterminer, sur une période de découpage, les modulantes de sorte que pour une impulsion de tension à générer par la commande d'un bras de commutation du premier convertisseur, la génération du front de tension montant pour cette impulsion coïncide avec la génération d'un front de tension descendant d'une impulsion à générer par un bras de commutation du deuxième convertisseur et la génération du front de tension descendant de cette impulsion coïncide avec la génération d'un front de tension montant d'une autre impulsion à générer par un autre bras de commutation du deuxième convertisseur.

**7.** Système de commande selon la revendication 6, **caractérisé en ce que** le module de synchronisation est exécuté pour :

- Synchroniser les fronts de tension montants des impulsions de tension générées sur les phases de sortie (U, V, W) du premier convertisseur avec des fronts de tension descendants des impulsions de tension générées sur les phases de sortie (X, Y, Z) du deuxième convertisseur, et
- Synchroniser les fronts de tension descendants des impulsions de tension générées sur les phases de sortie du premier convertisseur avec des fronts de tension montants des impulsions de tension générées sur les phases de sortie du deuxième convertisseur.

**8.** Système selon l'une des revendications 6 ou 7, **caractérisé en ce qu'**il consiste à caractériser chaque impulsion formée comme une succession d'états et **en ce que** :

- Une impulsion désignée 0-1-0 qui correspond à la succession de l'état logique 0, de l'état logique 1 et de l'état logique 0 comporte un front de tension montant suivi d'un front de tension descendant,
- Une impulsion désignée 1-0-1 qui correspond à la succession de l'état logique 1, de l'état logique 0 et de l'état logique 1 comporte un front de tension descendant suivi d'un front de tension montant, et **en ce que** :
- Les deux modulantes définissant l'impulsion de type 0-1-0 sont reliées par la relation suivante :

$$m_1 = m_2 + 2\alpha$$

- Dans laquelle $\alpha$ correspond au rapport cyclique de l'impulsion et m1 et m2 sont lesdites deux modulantes de l'impulsion de type 0-1-0,
- Les deux modulantes définissant l'impulsion de type 1-0-1 sont reliées par la relation suivante :

$$m_3 = m_4 + 2\beta$$

- Dans laquelle β est le rapport cyclique de l'impulsion de type 1-0-1
- le rapport cyclique β de l'impulsion 1-0-1 étant lié au rapport cyclique de l'impulsion 0-1-0 par la relation suivante :

$$\beta = 1 - \alpha$$

**9.** Système selon l'une des revendications 6 à 8, **caractérisé en ce qu'**il comporte un module de détection des modulantes en surmodulation en vue de déterminer un nombre de bras de commutation bloqués dans chaque convertisseur.

**10.** Système selon la revendication 9, **caractérisé en ce qu'**il comporte un module de détermination d'un nombre de synchronisation possible en fonction du nombre de bras de commutation bloqués dans chaque convertisseur.


**Patentansprüche**

**1.** Steuerverfahren, das für eine Anlage zur Steuerung eines Elektromotors umgesetzt wird, wobei die Steueranlage Folgendes umfasst:

- einen ersten Wandler (CONV1), der Schaltarme umfasst, die gesteuert werden, um Spannungsimpulse, die jeweils eine ansteigende Spannungsflanke und eine abfallende Spannungsflanke beinhalten, an einen ersten Elektromotor (M1) anzulegen, der durch erste Ausgangsphasen mit dem ersten Wandler verbunden ist,
- einen zweiten Wandler (CONV2), der Schaltarme umfasst, die gesteuert werden, um Spannungsimpulse, die jeweils eine ansteigende Spannungsflanke und eine abfallende Spannungsflanke beinhalten, an einen zweiten Elektromotor (M2) anzulegen, der durch zweite Ausgangsphasen mit dem zweiten Wandler verbunden ist,
- wobei der erste Wandler und der zweite Wandler parallel geschaltet und mit einem gleichen Gleichstromversorgungsbus verbunden sind, der eine Gleichspannung bereitstellt,
- wobei die ansteigende Spannungsflanke und die abfallende Spannungsflanke für jeden Spannungsimpuls mit Hilfe einer Pulsbreitenmodulation intersektiven Typs zwischen einem Träger asymmetrischen Typs und zwei Modulierenden bestimmt werden,
- wobei das Steuerverfahren einen Schritt der Synchronisierung der Impulse umfasst, um die durch die Anlage erzeugten Gleichtaktströme zu minimieren,

wobei das Verfahren **dadurch gekennzeichnet ist, dass** der Synchronisierungsschritt über eine Schaltperiode aus Folgendem besteht:

- Positionieren von Impulsen, indem für jeden Impuls die zwei Modulierenden bestimmt werden, die für seine Positionierung erforderlich sind,
- Bestimmen der Modulierenden über eine Schaltperiode, sodass für einen durch die Steuerung eines Schaltarms des ersten Wandlers zu erzeugenden Spannungsimpuls die Erzeugung der ansteigenden Spannungsflanke für diesen Impuls mit der Erzeugung einer abfallenden Spannungsflanke eines durch einen Schaltarm des zweiten Wandlers zu erzeugenden Impulses zusammenfällt und die Erzeugung der abfallenden Spannungsflanke dieses Impulses mit der Erzeugung einer ansteigenden Spannungsflanke eines anderen, durch einen anderen Schaltarm des zweiten Wandlers zu erzeugenden Impulses zusammenfällt.

**2.** Steuerverfahren nach Anspruch 1, **dadurch gekennzeichnet, dass** der Synchronisierungsschritt über eine Schaltperiode aus Folgendem besteht:

- Synchronisieren der ansteigenden Spannungsflanken der an den Ausgangsphasen (U, V, W) des ersten Wandlers erzeugten Spannungsimpulse mit abfallenden Spannungsflanken der an den Ausgangsphasen (X, Y, Z) des zweiten Wandlers erzeugten Spannungsimpulse und
- Synchronisieren der abfallenden Spannungsflanken der an den Ausgangsphasen des ersten Wandlers erzeugten Spannungsimpulse mit ansteigenden Spannungsflanken der an den Ausgangsphase des zweiten Wandlers erzeugten Spannungsimpulse.

3.  Verfahren nach einem der Ansprüche 1 oder 2, **dadurch gekennzeichnet, dass** es darin besteht, jeden gebildeten Impuls als eine Abfolge von Zuständen zu beschreiben, und dass:

    - ein Impuls, der als 0-1 -0 bezeichnet wird und der Abfolge des logischen Zustands 0, des logischen Zustands 1 und des logischen Zustands 0 entspricht, eine ansteigende Spannungsflanke, gefolgt von einer abfallenden Spannungsflanke umfasst,
    - ein Impuls, der als 1-0-1 bezeichnet wird und der Abfolge des logischen Zustands 1, des logischen Zustands 0 und des logischen Zustands 1 entspricht, eine abfallende Spannungsflanke, gefolgt von einer ansteigenden Spannungsflanke umfasst und dass:
    - die zwei Modulierenden, die den Impuls vom Typ 0-1-0 definieren, durch die folgende Beziehung verknüpft sind:

$$m_1 = m_2 + 2\alpha$$

    - wobei $\alpha$ dem Tastgrad des Impulses entspricht und $m_1$ und $m_2$ die zwei Modulierenden des Impulses vom Typ 0-1-0 sind,
    - die zwei Modulierenden, die den Impuls vom Typ 1-0-1 definieren, durch die folgende Beziehung verknüpft sind:

$$m_3 = m_4 + 2\beta$$

    - wobei $\beta$ der Tastgrad des Impulses vom Typ 1-0-1 ist,
    - wobei der Tastgrad $\beta$ des Impulses 1-0-1 mit dem Tastgrad des Impulses 0-1-0 durch die folgende Beziehung verknüpft ist:

$$\beta = 1 - \alpha$$

4.  Verfahren nach einem der Ansprüche 1 bis 3, **dadurch gekennzeichnet, dass** es einen Schritt der Erkennung der in Übermodulation befindlichen Modulierenden umfasst, um eine Anzahl von gesperrten Schaltarmen in jedem Wandler zu bestimmen.

5.  Verfahren nach Anspruch 4, **dadurch gekennzeichnet, dass** es einen Schritt der Bestimmung einer möglichen Synchronisierungsanzahl in Abhängigkeit von der Anzahl von gesperrten Schaltarmen in jedem Wandler umfasst.

6.  Steuersystem, das für eine Anlage zur Steuerung eines Elektromotors umgesetzt wird, wobei die Steueranlage Folgendes umfasst:

    - einen ersten Wandler, der Schaltarme umfasst, die gesteuert werden, um Spannungsimpulse, die jeweils eine ansteigende Spannungsflanke und eine abfallende Spannungsflanke beinhalten, an einen ersten Elektromotor anzulegen, der durch erste Ausgangsphasen mit dem ersten Wandler verbunden ist,
    - einen zweiten Wandler, der Schaltarme umfasst, die gesteuert werden, um Spannungsimpulse, die jeweils eine ansteigende Spannungsflanke und eine abfallende Spannungsflanke beinhalten, an einen zweiten Elektromotor anzulegen, der durch zweite Ausgangsphasen mit dem zweiten Wandler verbunden ist,
    - wobei der erste Wandler und der zweite Wandler parallel geschaltet und mit einem gleichen Gleichstromversorgungsbus verbunden sind, der eine Gleichspannung bereitstellt,
    - wobei die ansteigende Spannungsflanke und die abfallende Spannungsflanke für jeden Spannungsimpuls mit Hilfe einer Pulsbreitenmodulation intersektiven Typs zwischen einem Träger asymmetrischen Typs und zwei Modulierenden bestimmt werden,

    wobei das System ein Softwaremodul zur Synchronisierung der ersten Spannungsflanken mit den zweiten Spannungsflanken umfasst, um die durch die Anlage erzeugten Gleichtaktströme zu minimieren, und **dadurch gekennzeichnet ist, dass** das Softwaremodul zur Synchronisierung zu Folgendem fähig ist:

    - Positionieren von Impulsen, indem für jeden Impuls die zwei Modulierenden bestimmt werden, die für seine Positionierung erforderlich sind,
    - Bestimmen der Modulierenden über eine Schaltperiode, sodass für einen durch die Steuerung eines Schaltarms des ersten Wandlers zu erzeugenden Spannungsimpuls die Erzeugung der ansteigenden Spannungsflanke für diesen Impuls mit der Erzeugung einer abfallenden Spannungsflanke eines durch einen Schaltarm des zweiten Wandlers zu erzeugenden Impulses zusammenfällt und die Erzeugung der abfallenden Spannungsflanke dieses Impulses mit der Erzeugung einer ansteigenden Spannungsflanke eines anderen, durch einen anderen Schaltarm des zweiten Wandlers zu erzeugenden Impulses zusammenfällt.

7. Steuersystem nach Anspruch 6, **dadurch gekennzeichnet, dass** das Synchronisierungsmodul für Folgendes ausgeführt wird:

   - Synchronisieren der ansteigenden Spannungsflanken der an den Ausgangsphasen (U, V, W) des ersten Wandlers erzeugten Spannungsimpulse mit abfallenden Spannungsflanken der an den Ausgangsphasen (X, Y, Z) des zweiten Wandlers erzeugten Spannungsimpulse und
   - Synchronisieren der abfallenden Spannungsflanken der an den Ausgangsphasen des ersten Wandlers erzeugten Spannungsimpulse mit ansteigenden Spannungsflanken der an den Ausgangsphase des zweiten Wandlers erzeugten Spannungsimpulse.

8. System nach einem der Ansprüche 6 oder 7, **dadurch gekennzeichnet, dass** es darin besteht, jeden gebildeten Impuls als eine Abfolge von Zuständen zu beschreiben, und dass:

   - ein Impuls, der als 0-1-0 bezeichnet wird und der Abfolge des logischen Zustands 0, des logischen Zustands 1 und des logischen Zustands 0 entspricht, eine ansteigende Spannungsflanke, gefolgt von einer abfallenden Spannungsflanke umfasst,
   - ein Impuls, der als 1-0-1 bezeichnet wird und der Abfolge des logischen Zustands 1, des logischen Zustands 0 und des logischen Zustands 1 entspricht, eine abfallende Spannungsflanke, gefolgt von einer ansteigenden Spannungsflanke umfasst und dass:
   - die zwei Modulierenden, die den Impuls vom Typ 0-1-0 definieren, durch die folgende Beziehung verknüpft sind:

$$m_1 = m_2 + 2\alpha$$

   - wobei $\alpha$ dem Tastgrad des Impulses entspricht und m1 und m2 die zwei Modulierenden des Impulses vom Typ 0-1-0 sind,
   - die zwei Modulierenden, die den Impuls vom Typ 1-0-1 definieren, durch die folgende Beziehung verknüpft sind:

$$m_3 = m_4 + 2\beta$$

   - wobei $\beta$ der Tastgrad des Impulses vom Typ 1-0-1 ist,
   - wobei der Tastgrad $\beta$ des Impulses 1-0-1 mit dem Tastgrad des Impulses 0-1-0 durch die folgende Beziehung verknüpft ist:

$$\beta = 1 - \alpha$$

9. System nach einem der Ansprüche 6 bis 8, **dadurch gekennzeichnet, dass** es ein Modul zur Erkennung der in Übermodulation befindlichen Modulierenden umfasst, um eine Anzahl von gesperrten Schaltarmen in jedem Wandler zu bestimmen.

10. System nach Anspruch 9, **dadurch gekennzeichnet, dass** es ein Modul zur Bestimmung einer möglichen Synchronisierungsanzahl in Abhängigkeit von der Anzahl von gesperrten Schaltarmen in jedem Wandler umfasst.


## Claims

1. Control method implemented for an electric motor control installation, said control installation comprising:

   - A first converter (CONV1) having controlled switching arms for applying voltage pulses, each having a voltage rising edge and a voltage falling edge, to a first electric motor (M1) connected to said first converter by first output phases,

- A second converter (CONV2) having controlled switching arms for applying voltage pulses, each having a voltage rising edge and a voltage falling edge, to a second electric motor (M2) connected to said second converter by second output phases,
- Said first converter and said second converter being connected in parallel to one and the same DC supply bus supplying a DC voltage,
- For each voltage pulse, the voltage rising edge and the voltage falling edge are determined from pulse-width modulation of intersective type between an asymmetric type carrier and two modulants,
- the control method including a pulse synchronization step in order to minimize the common-mode currents generated by said installation,

Said method being **characterized in that** the synchronization step, over a switching period, consists in:

- Positioning pulses by determining, for each pulse, the two modulants required for its positioning,
- Determining, over a switching period, the modulants so that, for a voltage pulse to be generated by controlling a switching arm of the first converter, the generation of the voltage rising edge for this pulse coincides with the generation of a voltage falling edge of a pulse to be generated by one switching arm of the second converter, and the generation of the voltage falling edge of this pulse coincides with the generation of a voltage rising edge of another pulse to be generated by another switching arm of the second converter.

2. Control method according to Claim 1, **characterized in that** the synchronization step, over a switching period, consists in:

- Synchronizing the voltage rising edges of the voltage pulses generated on the output phases (U, V, W) of the first converter with voltage falling edges of the voltage pulses generated on the output phases (X, Y, Z) of the second converter, and
- Synchronizing the voltage falling edges of the voltage pulses generated on the output phases of the first converter with voltage rising edges of the voltage pulses generated on the output phases of the second converter.

3. Method according to either of Claims 1 and 2, **characterized in that** it consists in characterizing each pulse formed as a succession of states and **in that**:

- A pulse, designated 0-1-0, which corresponds to the succession of the logic state 0, the logic state 1 and the logic state 0, has a voltage rising edge followed by a voltage falling edge,
- A pulse, designated 1-0-1, which corresponds to the succession of the logic state 1, the logic state 0 and the logic state 1, has a voltage falling edge followed by a voltage rising edge, and **in that**:
- The two modulants defining the 0-1-0 type pulse are linked by the following equation:

$$m_1 = m_2 + 2\alpha$$

- Wherein $\alpha$ corresponds to the duty cycle of the pulse and m1 and m2 are both said modulants of the 0-1-0 type pulse,
- The two modulants defining the 1-0-1 type pulse are linked by the following equation:

$$m_3 = m_4 + 2\beta$$

- Wherein $\beta$ is the duty cycle of the 1-0-1 type pulse
- The duty cycle $\beta$ of the 1-0-1 pulse being related to the duty cycle of the 0-1-0 pulse by the following equation:

$$\beta = 1 - \alpha$$

4. Method according to one of Claims 1 to 3, **characterized in that** it includes a step of detecting modulants in overmodulation in order to determine a number of switching arms blocked in each converter.

5. Method according to Claim 4, **characterized in that** it includes a step of determining a number of possible synchronizations on the basis of the number of switching arms blocked in each converter.

6. Control system implemented for an electric motor control installation, said control installation comprising:

- A first converter having controlled switching arms for applying voltage pulses, each having a voltage rising edge and a voltage falling edge, to a first electric motor connected to said first converter by first output phases,
- A second converter having controlled switching arms for applying voltage pulses, each having a voltage rising edge and a voltage falling edge, to a second electric motor connected to said second converter by second output phases,
- Said first converter and said second converter being connected in parallel to one and the same DC supply bus supplying a DC voltage,
- For each voltage pulse, the voltage rising edge and the voltage falling edge are determined from pulse-width modulation of intersective type between an asymmetric type carrier and two modulants,

the system having a synchronization software module for synchronizing the first voltage edges with the second voltage edges in order to minimize the common-mode currents generated by said installation and being **characterized in that** said synchronization software module is able to:

- Position pulses by determining, for each pulse, the two modulants required for its positioning,
- Determine, over a switching period, the modulants so that, for a voltage pulse to be generated by controlling a switching arm of the first converter, the generation of the voltage rising edge for this pulse coincides with the generation of a voltage falling edge of a pulse to be generated by one switching arm of the second converter, and the generation of the voltage falling edge of this pulse coincides with the generation of a voltage rising edge of another pulse to be generated by another switching arm of the second converter.

7. Control system according to Claim 6, **characterized in that** the synchronization module is run in order to:

- Synchronize the voltage rising edges of the voltage pulses generated on the output phases (U, V, W) of the first converter with voltage falling edges of the voltage pulses generated on the output phases (X, Y, Z) of the second converter, and
- Synchronize the voltage falling edges of the voltage pulses generated on the output phases of the first converter with voltage rising edges of the voltage pulses generated on the output phases of the second converter.

8. System according to either of Claims 6 and 7, **characterized in that** it consists in characterizing each pulse formed as a succession of states and **in that**:

- A pulse, designated 0-1-0, which corresponds to the succession of the logic state 0, the logic state 1 and the logic state 0, has a voltage rising edge followed by a voltage falling edge,
- A pulse, designated 1-0-1, which corresponds to the succession of the logic state 1, the logic state 0 and the logic state 1, has a voltage falling edge followed by a voltage rising edge, and **in that**:
- The two modulants defining the 0-1-0 type pulse are linked by the following equation:

$$m_1 = m_2 + 2\alpha$$

- Wherein $\alpha$ corresponds to the duty cycle of the pulse and m1 and m2 are both said modulants of the 0-1-0 type pulse,
- The two modulants defining the 1-0-1 type pulse are linked by the following equation:

$$m_3 = m_4 + 2\beta$$

- Wherein $\beta$ is the duty cycle of the 1-0-1 type pulse
- The duty cycle $\beta$ of the 1-0-1 pulse being related to the duty cycle of the 0-1-0 pulse by the following equation:

$$\beta = 1 - \alpha$$

9. System according to one of Claims 6 to 8, **characterized in that** it includes a module for detecting modulants in overmodulation in order to determine a number of switching arms blocked in each converter.

**10.** System according to Claim 9, **characterized in that** it includes a module for determining a number of possible synchronizations on the basis of the number of switching arms blocked in each converter.

Fig. 1A

*Fig. 1B*

CONV10          CONV20

M1    C    M2

REC10          REC20

*Fig. 2*

F_MC

$V_{MC1}$    $i_{MC1}$

CP_1

$V_{MC2}$

CP_2

$i_{MC2}$

*Fig. 3A*

P1

$m_{ref}$

+1

-1

$\alpha T$

-E/2

E/2

MLI

T

*Fig. 3B*

+1

$m_1$

$2\alpha$

$m_2$

P2

-1

$\alpha T$

MLI

T

**Fig. 4A**

$m_1$
$2\alpha$
$m_2$

$\alpha T$

T

**Fig. 4B**

$m_3$
$2\beta$
$m_4$

$\beta T$

T

**Fig. 5**

CONV1 | $m_{ref\_1}$

U, V, W

$h_{NO\_1}$

U, V, W

$m_{conv1}$

CONV2 | $m_{ref\_2}$

X, Y, Z

$h_{NO\_2}$

X, Y, Z

$m_{conv2}$

$m_{3\_U}$
$m_{4\_U}$
$m_{3\_V}$
$m_{4\_V}$
$m_{3\_W}$
$m_{4\_W}$

$m_{1\_X}$
$m_{2\_X}$
$m_{1\_Y}$
$m_{2\_Y}$
$m_{1\_Z}$
$m_{2\_Z}$

*Fig. 6*

**Fig. 7**

$V_{XO}$

$V_{VO}$ $\beta_V T$

$V_{YO}$ $\alpha_Y T$

$V_{WO}$ $\beta_W T$

$\alpha_Z T$

$V_{ZO}$

$V_{UO}$ $\beta_U T$

**Fig. 8**

$V_{XO}$

$V_{VO}$

$V_{YO}$

$V_{WO}$ $\beta_W T$

$\alpha_Z T$

$V_{ZO}$

$V_{UO}$ $\beta_U T$

**Fig. 9**

$V_{XO}$

$V_{VO}$

$V_{YO}$ $\alpha_Y T$

$V_{WO}$ $\beta_W T$

$\alpha_Z T$

$V_{ZO}$

$V_{UO}$ $\beta_U T$

**Fig. 10**

$V_{XO}$

$V_{VO}$

$V_{YO}$

$V_{WO}$ $\beta_W T$

$\alpha_Z T$

$V_{ZO}$

$V_{UO}$ $\beta_U T$

**Fig. 11**

**Fig. 12**

## RÉFÉRENCES CITÉES DANS LA DESCRIPTION

**Documents brevets cités dans la description**

- JP 2003018853 B
- US 6185115 A
- EP 2442436 A2
- US 2011122661 A1
- US 2011260656 A1